Europäisches Patentamt

European Patent Office

Office européen des brevets

(19)

(11) Publication number: **0 128 251**
**B1**

(12) # EUROPEAN PATENT SPECIFICATION

(45) Date of publication of patent specification: 01.06.88

(51) Int. Cl.⁴: **F 16 H 37/04**

(21) Application number: 83303319.4

(22) Date of filing: 08.06.83

(54) **Multispeed gearbox.**

(43) Date of publication of application:
**19.12.84 Bulletin 84/51**

(45) Publication of the grant of the patent:
**01.06.88 Bulletin 88/22**

(84) Designated Contracting States:
**AT BE DE FR GB IT NL SE**

(56) References cited:
**EP-A-0 113 490**
**EP-A-0 113 495**
**DE-A- 720 884**
**DE-A-2 056 521**
**DE-A-3 024 862**
**FR-A-2 388 689**
**GB-A- 656 054**
**US-A-2 739 487**
**US-A-2 991 661**
**US-A-4 299 140**

(73) Proprietor: **DEERE & COMPANY**
**1 John Deere Road**
**Moline Illinois 61265 (US)**

(72) Inventor: **Weiss, Heinz**
**Volkerstrasse 24**
**D-6140 Bensheim (DE)**

(74) Representative: **Pears, David Ashley et al**
**REDDIE & GROSE 16 Theobalds Road**
**London WC1X 8PL (GB)**

Courier Press, Leamington Spa, England.

## Description

The present invention relates to a multispeed gearbox for a vehicle, especially suitable for an agricultural or earth-working vehicle.

A gearbox is known from DE—A—2 056 521 in which a dual clutch main gear set is in cascade with a range gear set selecting between low and high speed ranges. Both gear sets comprise spur gears arranged on the same two shaft lines. The two clutches are on the output side of the main gear set and are used to select alternative drive routes into the range gear set. They are in addition to the normal clutch preceding the main gear set.

In contrast the present invention is concerned with a powershift gearbox, namely a gearbox which can be shifted under load, making use of its own clutches and/or brakes rather than relying on an external clutch. Epicyclic gears ave been used for decades in powershift gearboxes but they suffer from various disadvantages. The number of gear wheels is large which means many bearings, many meshes, higher frictional losses and increased complexity and expense. For this reason there is considerable interest in spur gearboxes and a dual clutch gearbox enables power-shifting with such a gearbox. The two clutches engage the odd and even numbered gears respectively so that, when one clutch is engaged, the selector associated with the other clutch is not under load and may be shifted to preselect the next gear up or down, as required.

When a range gear set is cascaded with the dual clutch main gear set a problem arises in enabling full powershifting. The dual clutches of the main gear set do not allow preselection of a different gear of the range gear set, which is under load. Many solutions to this problem exist, including use of an epicyclic range gear set. It is also known (DE—A—3 024 862) to provide an additional coupling which can be engaged to bypass the main (dual clutch) and range gear sets and which provides gear ratios in between the ranges. While such a coupling is engaged the range gear set can clearly be preselected but this represents a complex and expensive solution.

A spur gear powershift gearbox is known from US—A—2 991 661, wherein the input shaft can be coupled directly to the output shaft for one of the ratios (direct drive). However this known gearbox does not include a range gear set and does not address the problem of achieving full power-shifting with a cascaded main gear set and range gear set.

The gearbox according to the present invention is defined in the claim 1 and claim 12.

Although arrangements in accordance with the invention are possible with the range gear set preceding the main gear set, in the preferred embodiment the range gear set, follows the main gear set, the main gear set is a top shaft synchronised gear, and one gearwheel pair (seventh and eighth gearwheels) provides the top speed in the low range and drives into the range gear output shaft downstream of the high-low selector.

It is economical if the said one gearwheel pair is one of first and second gearwheel pairs (fifth to eighth gearwheels) providing a step down ratio when the range gear selector selects low range. The high-low selector couples the main gear bottom shaft directly to the range gear output shaft for the high range. A second selector in the range gear set is provided for disconnecting the direct drive into the range gear output shaft. This is necessary to allow preselection of the top gear in the low range. The second selector preferably alternatively selects reverse.

An arrangement as described in the preceding paragraph allows a particularly advantageous development of the invention. Since the top gear in the low range is provided by a direct drive into the range gear output shaft, it is no longer possible to obtain a corresponding top gear in the high range by normal use of the range gear set. In some cases it is possible to dispense with this high range top gear but it is preferred to provide it by using the second gearwheel pair of the range gear set to drive directly into the range gear output shaft. This is possible when the high-low selector of the range gear set is so constructed as to be able to effect both of its couplings simultaneously.

These and other advantageous features of an embodiment of the invention will now be explained with reference to the accompaning drawings which are provided by way of example and in which:

Fig. 1 is a schematic plan view of a gearbox embodying the invention, and

Fig. 2 is a cross section of one selector of the gearbox.

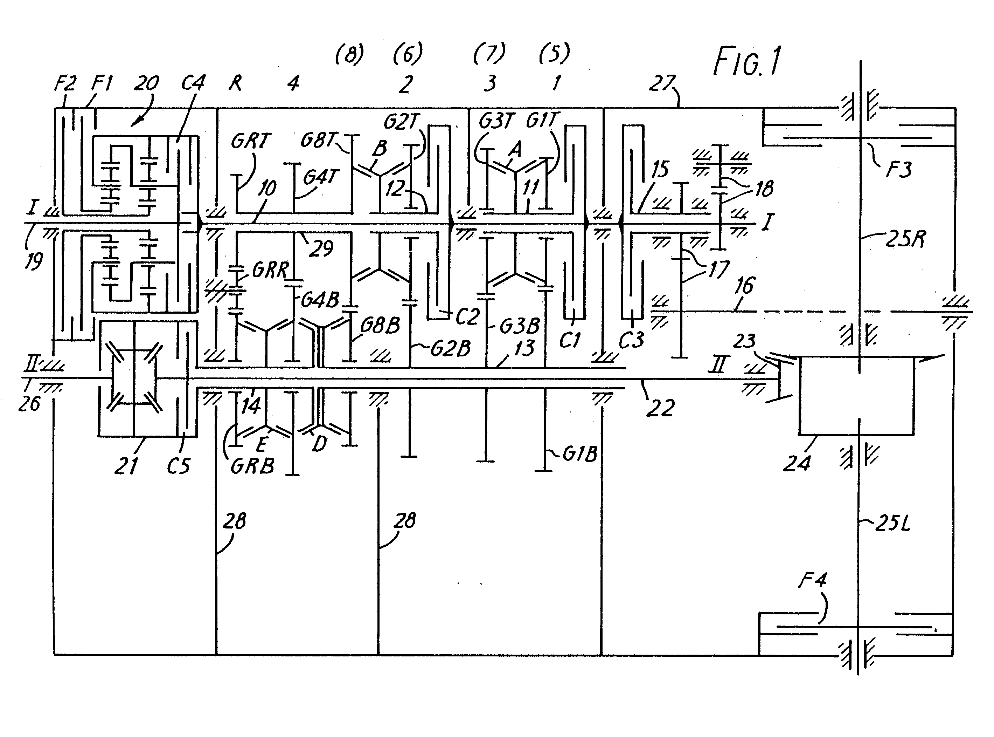

An outline will first be given of the layout of the gearbox shown in Fig. 1, before proceeding to a detailed description of the various parts thereof. The elements of the gearbox are laid out mainly on two longitudinal shaft lines I and II which lie in the same horizontal plane. In Fig. 1 the front of the vehicle is to the left. The shaft line (II) is centrally disposed while the shaft Line (I) is offset laterally, to the righthand side in the illustrated embodiment.

Power flow proceeds from a main transmission input shaft 10 on the first shaft line (I) to first and second main gearbox clutches C1 and C2 which drive respective top shafts 11 and 12. These top shafts are hollow and the input shaft 10 passes therethrough. In most gears of the gearbox, power flows from the driven topshaft 11 or 12, a corresponding first selector A or second selector B and the gearwheel pair thereby selected, to a hollow bottom shaft 13 (countershaft) on the shaft line II. The shaft 13 is coupled to a hollow range gear output shaft 14 on the same shaft line II by way of the range gear set which provides a step-down ratio or direct drive in accordance with the position of a selector D.

Various ancillary features of the gearbox will now be described. The input shaft 10 can also be coupled by a clutch C3 to a hollow shaft 15. This drives a PTO shaft 16 by way of a pair of spur gears 17 and also drives a charge pump within the gearbox casing by way of a pair of spur gears 18. This pump provides hydraulic power for implements attached to the vehicle.

In a simple version of the gearbox the input shaft 10 is driven directly from the engine (although devices such as shock absorbers and universal joints may naturally be included). The gearbox will then provide a total number of forward gears equal to the number of main gears multiplied by two. Thus in the illustrated embodiment, the main gear set has four gears, the range gear set provides two ranges and the total number of gears is eight. When the range of gears has to be extended, the shaft 19 from the engine can be coupled to the main input shaft 10 by way of a splitter gear set 20 multiplying the number of gears by two or three depending on the splitter gear stages. As illustrated, the splitter gear set is a conventional epicyclic gear providing direct drive when a clutch C4 is engaged, underdrive when a brake F1 is engaged and overdrive when a brake F2 is engaged. The corresponding gear ratios will be explained below but no detailed description of the construction of splitter gear is required. The main gears are also available in reverse. The illustrated embodiment moreover makes provision for four wheel drive; again this is an optional feature. Specifically, the output shaft 14 drives a longitudinal differential 21 from which power flows to the rear wheels by way of a shaft 22 extending rearwardly through the hollow shafts 13 and 14 to a bevel gear 23. This gear drives a transverse differential 24 which divides the power between half shafts 25R and 25L. The differential 24 is provided in well known manner with a lock, preferably hydraulically actuated. The main rearwheel brakes F3 and F4 are also built into the gearbox on the half shafts.

A front wheel drive shaft 26 extends forwardly from the longitudinal differential 21 and drives a front transverse differential dividing power between the front wheel half shafts. These latter elements are not shown and represent the only parts of the transmission outside the gearbox. The longitudinal differential 21 is provided with a lock clutch C5 which enables all power to be routed to the rear wheel or front wheel drive, depending on soil conditions.

There is thereby provided a particularly compact design whereby virtually all components of the transmission, the rearwheel brakes, the PTO drive and charge pump are contained within one gearbox casing 27 having suitable partition walls 28 for the necessary shaft bearings. In particular, the casing 27 can be a lightweight casting which does not form part of the frame structure of the vehicle. The gearbox is mounted in and given structural integrity by a full frame of the vehicle. Moreover, the shaft lines (I) and (II) as well as the half shafts 25R and 25L are preferably arranged all at the same level at the parting plane between bottom and cover parts of the gearbox casing 27. This makes it easy to assemble the components of the gearbox into the casing before fitting the cover part and maintenance is also greatly simplified. The PTO shaft 16 on the other hand must be arranged at either a higher or lower level so as not to interfere with the half shaft 25R and the shaft 16 is therefore not journalled at the parting plane but through either the cover part or bottom part of the casing 27. All these features are explained in more detail in our prior European Patent Application No. 83 300 039.1 (Publication No.         ).

It is also convenient to mention at this stage that the PTO shaft 16 is not driven directly from the engine input shaft 19 but is driven from the main input shaft 10 downstream of the splitter gear 20. This enables more efficient PTO operation.

Attention will now be given to the detail of the main gear set and the range gear set. As already noted, the main gear has dual clutches C1 and C2 and corresponding selectors A and B. The range gear has the previously mentioned high-low selector D (third selector) and also has a reverse-low selector E (fourth selector). The various gearwheels are denoted as follows. First and third gearwheels G1T and G1B are on the top and bottom shaft respectively, as indicated by the final letters T and B, and constitute the gearwheel pair for speed 1 of the main gear, as indicated by the first two symbols G1. Similarly there are gearwheel pairs for second, third and fourth speeds and labelled G2T, G2B (second and fourth gearwheels) and G3T, G3B (ninth and tenth gearwheels) and G4T (eighth gearwheel) G4B. The corresponding speeds 1, 2, 3 and 4, which are the speeds in the low range of the range gear, are indicated along the top of the diagram. The high range speeds are indicated in brackets as 5, 6, 7 and 8. Another gearwheel pair G8T, G8B (seventh and fifth gearwheels) is provided for speed 8. Finally gearwheels GRT, GRR and GRB (reverse gearwheel) are provided for reverse, denoted at the top by the letter R.

All gearwheels are in constant mesh and the selectors A, B, D and E are synchronised selectors. So far as speeds 1, 2, 3 and 5, 6, 7 are concerned, the main gear is a dual clutch, top synchronised constant mesh gearbox. The gears G1B, G2B and G3B are all fast with the bottom shaft 13. The selector A engages either G1T or G3T (odd gears) to the top shaft 11 while the selector B can engage the even numbered gears G2T, G4T and G8T to the to shaft 12.

Speeds 4 and 8 are provided in a different manner and the corresponding gearwheel pairs also function as the step-down gears of the range gear. The gears G4T, G8T and GRT are all integral with another hollow shaft 29 on the shaft line I and are driven by the top shaft 12 when the selector B is shifted to the left in Fig. 1. The gear wheel pair G8B, G8T together with the pair G4T, G4B function as the step-down gears of the range gear, and the low speeds 1, 2 and 3 are selected by shifting the selector D to the right to couple the bottom shaft 13 to the gear G8B. The selector E must also be shifted to the right to couple the gear G4B to the output shaft 14. On the other hand, the high range gears 5, 6 and 7 are selected by shifting the selector D to the left to couple the bottom shaft 13 directly to the output shaft 14.

Speed 4 is selected with the selector E still to the right and with the selector B to the left. The gearwheel pair G4T, G4B drives direct into the output shaft 14. Speed 8 on the other hand, also obtained with the selector B to the left, requires the gear G8B to be connected directly to the output shaft 14. This is achieved by a special construction of the selector D which effectively comprises two individually operable selectors so that both may be engaged simultaneously. This is symbolised by the double line showing of the selector D. When the selector D is engaged both to the right and to the left it can be seen that the gearwheel G8B is coupled through the selector to the output shaft 14.

It can also be seen that in each of speeds 1, 2, 3 and 4 it is possible to engage reverse by shifting the selector E to the left.

Table 1 at the end of this description summarises the way in which the speeds 1 to 8 are obtained under control of the clutches C1 and C2 and the selectors A, B, D and E. The abbreviations ENG and DIS mean engaged and disengaged respectively while the letters L and R indicate shifting of a selector to the left and right respectively in Fig. 1. In the columns A, B, D and E a dash indicates that the position of the selector is immaterial. It is this factor which makes possible preselection of speeds and the basic pattern of dual clutch operation is readily apparent from columns C1 and C2 indicating the alternate engagement of these clutches. As an example, take the situation in speed 2 with the clutch C2 engaged and the position of the selector A immaterial. Because of this latter factor, the selector A can be shifted either to the left or right depending upon whether the driver wishes to select an up-change or a down-change. Power shifting is then effected simply by disengaging the clutch C2 and engaging the clutch C1.

If the selector B were involved in normal manner in selection of speed 4, power shifting between speeds 4 and 5 would be impossible because the selector D would have to be set to the right for speed 4 and to the left for speed 5. This constraint is avoided by the invention in that the selector D is by-passed in speed 4 and its position is selectable. It may therefore be preselected either to the left or the right for an up-shift to speed 5 or a down-shift to speed 3 and the pattern of dual clutch operation continues uninterrupted through the speeds 3, 4, 5.

The selector E needs to be the right in speeds 1 to 4 and it must be disengaged in speed 8. As previously indicated the selector D has to be engaged both to the left and the right in speed 8. In speed 7 it has to be engaged to the left. As between speeds 7 and 8 it is therefore necessary to consider the engagement and disengagement of the selector D.

Take the case of an upshift from speed 7 to speed 8; power is flowing from the shaft 13 through the selector D to the shaft 14 but the gears G8B, G8T, G4T and G4B are all idle. Therefore the additional engagement of selector D to the right is possible and speed 8 is engaged when the odd speed clutch C1 is disengaged and the even speed clutch C2 is engaged. On the other hand, for a step-down from speed 8 to speed 7 it is merely necessary to change over the clutches once again and the selector D can then be disengaged on the righthand side.

The control of the various clutches and selectors can basically follow conventional principles whether selection is purely by way of mechanical linkages or, as is preferred, by way of hydraulic actuators. Controlling logic can readily be provided to establish the desired pattern or selection for each change of speed. In particular the control of the selector E may be linked to that of the selector D in the manner which is apparent from the columns D and E of Table 1.

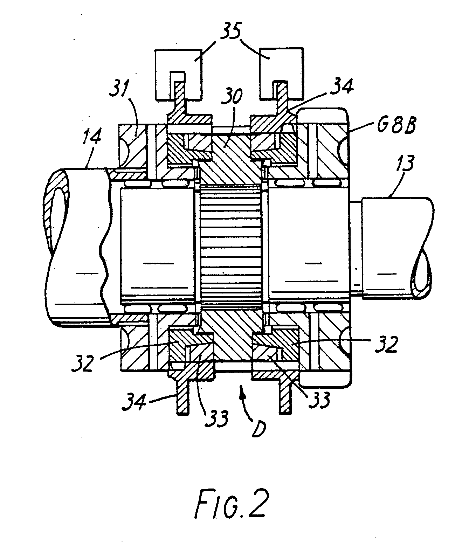

Fig. 2 shows a possible construction for the selector D. The hollow shaft 13 has the gearwheel G8B journalled thereon and the synchroniser body 30 is splined to this shaft. On the opposite side of the synchroniser body, instead of another gearwheel, there is provided a collar 31 integral with the hollow output shaft 14. On the two sides of the synchroniser body 30 there are provided separate clutch bodies 32 and separate synchroniser rings 33. Similarly there are two separate collars 34 shifted by respective claws 35 and effecting coupling of the synchroniser body 30 to the gearwheel G8B on the one hand and the collar 31 on the other hand.

A four speed main gear in conjunction with a two speed range gear employing spur gear wheels in the normal manner will provide four speeds with a single mesh and four speeds with three meshes. It is a particular advantage of the arrangement described that the number of speeds with only one mesh is increased to five. Thus, speed four is additionally a single mesh speed and this is advantageous on grounds of economy in that the fourth speed is a particularly important one in practical operation.

As to the speeds themselves, Table 2 shows the complete range of ground speeds in kilometres per hour for an engine speed of 2,000 r.p.m. and in the case where a three speed splitter gear 20 is provided with speeds L, M and H. M is a direct drive (clutch C4) whereas H is overdrive (brake F2) at a step-up ratio of 1.2386. L is underdrive (brake F1) with a step-down ratio of 0.8074. The eight speeds 1 to 8 are substantially in a geometric progression, the ratios between these speeds being shown between the rows of Table 2. In direct drive M the eight speeds provide a range of speeds from 1.6 to 32 km/h with an average speed ratio of 1.5371. Underdrive L provides intervening speeds and a lowest speed of 1.3 km/h. Apart from providing a top speed of 40 km/h, overdrive H essentially duplicates the top seven underdrive L speeds. There are therefore in total seventeen usefully different ground speeds which is adequate even for very large tractors. The duplication of speeds as between underdrive and overdrive provides flexibility in relating the PTO speed to the ground speed, as explained more fully in the above mentioned co-pending application of even date. For example, if the PTO shaft requires a higher speed, without increasing the ground speed, it is possible to shift up to overdrive in the splitter gear 20 with a compensating step-down by way of the main gear and range gear.

TABLE 1

| Speed | C1 | C2 | A | B | D | E |
|-------|-----|-----|---|---|-------|-----|
| 1 | ENG | DIS | R | — | R | R |
| 2 | DIS | ENG | — | R | R | R |
| 3 | ENG | DIS | L | — | R | R |
| 4 | DIS | ENG | — | L | L or R | R |
| 5 | ENG | DIS | R | — | L | — |
| 6 | DIS | ENG | — | R | L | — |
| 7 | ENG | DIS | L | — | L | — |
| 8 | DIS | ENG | — | L | L & R | DIS |

TABLE 2

| Speeds | L | M | H |
|--------|------|------|------|
| | —◄—0,8074—— | —1,2386——— | ►— |
| 1 | 1,31 | 1,62 | 2,0 |
| 1,56 | | | |
| 2 | 2,04 | 2,53 | 3,13 |
| 1,57 | | | |
| 3 | 3,20 | 3,97 | 4,91 |
| 1,5 | | | |
| 4 | 4,81 | 5,95 | 7,37 |
| 1,5 | | | |
| 5 | 7,21 | 8,93 | 11.05 |
| 1,56 | | | |
| 6 | 11,3 | 14,00 | 17,34 |
| 1,57 | | | |
| 7 | 17,46 | 21,98 | 27,22 |
| 1,5 | | | |
| 8 | 25,8 | 31,97 | 39,60 |

**Claims**

1. A multispeed powershift gearbox comprising first and second friction clutches (C1, C2) having drive parts and driven parts;

—An input shaft (10) with the drive parts of the friction clutches (C1, C2) affixed thereto;

—First and second selectors (A, B) non-rotatably connected respectively to the driven parts of the friction clutches (C1, C2), freely rotatable with respect to the input shaft (10) and adapted to be connected to first and second gearwheels (G1T and G2T) respectively;

—A counter shaft (bottom shaft 13) with third and fourth gearwheels (G1B, G2B) affixed thereto and meshing with said first and second gearwheels (G1T and G2T) respectively;

—A fifth gearwheel (G8B) freely rotatable on the counter shaft (bottom shaft 13) and adapted to be connected by a third selector (D) to the counter shaft;

—A range gear set with first and second shafts (14, 29) one being the output shaft (14) adapted to be connected to the counter shaft (bottom shaft 13) by the third selector (D) and

—Seventh and eighth gearwheels (G8T and G4T) on the second shaft (29) and meshing with the fifth and a sixth gearwheel (G8B and G4B).

2. A multispeed powershift gearbox as claimed in claim 1, characterised by a fourth selector (E) affixed to the first shaft (14) and adapted to be connected to the sixth gearwheel (G4B) freely rotatably on the first shaft (14).

3. A multispeed powershift gearbox as claimed in claim 1, characterised by a ninth gearwheel (G3T) adapted to be connected to the first selector (A) and meshing with a tenth gearwheel (G3B) affixed to the counter shaft (bottom shaft 13).

4. A multispeed powershift gearbox as claimed in claim 1, characterised in that the second selector (B) is adapted to be connected to the second shaft (29).

5. A multispeed powershift gearbox as claimed in claim 4, characterised in that the third selector (D) is adapted to be simultaneously connected to the fifth gearwheel (G8B) and to the first shaft (14).

6. A multispeed powershift gearbox as claimed in one or more of the above claims, characterised in that the fourth selector (E) is adapted to be connected to a reverse gearwheel (GRB) freely rotatable on the first shaft (14).

7. A multispeed powershift gearbox as claimed in one or more of the above claims, characterised in that the first and second selectors (A, B) are connected to the driven parts of the friction clutches (C1, C2) by first and second hollow top shafts (12, 13) freely rotatably on the input shaft (10) whereby the first and ninth gearwheel (G1T, G3T) are freely rotatable on the first top shaft (11) on opposite sides of the first selector (A) and whereby the second gearwheel (G2T) is freely rotatable on the second top shaft (12) between the second selector (B) and the second friction clutch (C2).

8. A multispeed powershift gearbox as claimed in one of more of the above claims, characterised in that the fourth selector (E) is affixed to the output shaft (14).

9. A multispeed powershift gearbox as claimed in one or more of the above claims, characterised in that the input shaft (10), the first and second top shaft (11, 12) and the second shaft (29) provide a first shaft line (I) and the counter shaft (bottom shaft 13) and the first or output shaft (14) provide a second shaft line (II).

10. A multispeed powershift gearbox as claimed in one or more of the above claims, characterised by a longitudinal differential (21) forward of the gears and driven by the first output shaft (14), and a driven shaft (22) extending through the first or output shaft (14) and through the counter shaft (bottom shaft 13) to a transverse differential (24).

11. A multispeed powershift gearbox as claimed in one or more of the above claims, characterised by a two or three speed splitter gear set (20) preceding the main and range gear sets and by a PTO drive (C3, 17, 16) driven from the output side of the splitter gear set.

12. A multispeed powershift gearbox comprising a main gear set in cascade with a range gear set and a dual clutch (C1, C2) for engaging the odd and even numbered gears respectively, wherein one of the clutches is adapted to be connected to the range gear set so as to bypass the gears of the main gear set.

**Patentansprüche**

1. Mehrgängiges, unter Last schaltbares Wechselgetriebe, welches

—erste und zweite Reibungskupplungen (C1, C2) mit treibenden und getriebenen Teilen;

—eine Eingangswelle (10), mit der die treibenden Teile der Reibungskupplungen (C1, C2) fest verbunden sind;

—erste und zweite Selektoren (A, B), die undrehbar jeweils mit den getrieben Teilen der Reibungskupplungen (C1, C2) verbunden, gegenüber der Eingangswelle (10) frei drehbar und so angepaßt sind, daß sie jeweils mit ersten und zweiten Geschwindigkeiten (G1T und G2T) verbunden werden können;

—eine Vorgelegewelle (Bodenwelle 13) mit auf dieser befestigten dritten und vierten Getrieberädern (G1B, G2B), die jeweils mit den genannten ersten und zweiten Getrieberädern (G1T und G2T) in Eingriff stehen;

—ein fünftes Getrieberad (G8B), das auf der Vorgelegewelle (Bodenwelle 13) frei drehbar und so angepaßt ist, daß es durch einen dritten Selektor, (D) mit der Vorgelegewelle verbunden werden kann;

—einen Bereichsgetriebesatz mit ersten und zweiten Wellen (14, 29), von denen eine die Ausgangswelle (14) und so angepaßt ist, daß sie mit der Vorgelegewelle (Bodenwelle 13) durch den dritten Selektor (D) verbunden werden kann, und

—siebte und achte Getrieberäder (G8T und G4T) auf der zweiten Welle 29 umfaßt, die mit dem fünften und einem sechsten Getrieberad (G8B und G4B) in Eingriff stehen.

2. Mehrgängiges, unter Last schaltbares Wechselgetriebe nach Anspruch 1, gekennzeichnet durch einen vierten Selektor (E), der an der ersten Welle (14) befestigt und so angepaßt ist, daß er mit dem auf der ersten Welle (14) frei drehbaren sechsten Getrieberad (G4B) verbunden werden kann.

3. Mehrgängiges, unter Last schaltbares Wechselbetriebe nach Anspruch 1, gekennzeichnet durch ein neuntes Getrieberad (G3T), das so angepaßt ist, daß es mit dem ersten Selektor (A) verbunden werden kann und mit einem fest auf der Vorgelegewelle (Bodenwelle (13) angeordneten zehnten Getrieberad (G3B) in Eingriff steht.

4. Mehrgängiges, unter Last schaltbares Wechselgetriebe nach Anspruch 1, dadurch gekennzeichnet, daß der zweite Selektor (B) so angepaßt ist, daß er mit der zweiten Welle (29) verbunden werden kann.

5. Mehrgängiges, unter Last schaltbares Wechselgetriebe nach Anspruch 4, dadurch gekennzeichnet, daß der dritte Selektor (D) so angepaßt ist, daß er gleichzeitig mit dem fünften Getrieberad (G8B) und der ersten Welle (14) verbunden werden kann.

6. Mehrgängiges, unter Last schaltbares Wechselgetriebe nach einem oder mehreren der obigen Ansprüche, dadurch gekennzeichnet, daß der vierte Selektor (E) so angepaßt ist, daß er mit einem auf der ersten Welle (14) frei drehbaren Rückwärtsgang-Getrieberad (GRB) verbunden werden kann.

7. Mehrgängiges, unter Last schaltbares Wechselgetriebe nach einem oder mehreren der obigen Ansprüche, dadurch gekennzeichnet, daß die ersten und zweiten Selektoren (A, B) mit dem getrieben Teilen der Reibungskupplungen (C1, C2) durch erste und zweite oben angeordnete Hohlwellen (12, 13) verbunden sind, die auf der Eingangswelle (10) frei drehbar sind, während das erste und das neunte Getriebsrad (G1T, G3T) auf der ersten oberen Welle (11) auf entgegengesetzten Seiten des ersten Selektors (A) und das zweite Getrieberad (G2T) auf der zweiten oberen Welle (12) zwischen dem zweiten Selektor (B) und der zweiten Reibungskupplung (C2) jeweils frei drehbar sind.

8. Mehrgängiges, unter Last schaltbares Wechselgetriebe nach einem oder mehreren der obigen Ansprüche, dadurch gekennzeichnet, daß der vierte Selektor (E) mit der Ausgangswelle (14) fest verbunden ist.

9. Mehrgängiges, unter Last schaltbares Wechselgetriebe nach einem oder mehreren der obigen Ansprüche, dadurch gekennzeichnet, daß die Eingangswelle (10), die erste und die zweite oben angeordnete Welle (11, 12) sowie die zweite Welle (29) eine erste Wellenlinie (I) und die Vorgelegewelle (Bodenwelle 13) und die erste oder Ausgangswelle (14) eine zweite Wellenlinie (II) bilden.

10. Mehrgängiges, unter Last schaltbares Wechselgetriebe nach einem oder mehreren der obigen Ansprüche, gekennzeichnet durch ein Längsdifferential (21), das vor den Getrieberädern angeordnet ist und durch die erste Ausgangswelle (14) angetrieben wird, und durch eine getriebene Welle (22), die sich durch die erste oder Ausgangswelle (14) und durch die Vorgelegewelle (Bodenwelle 13) zu einem querliegenden Differential (24) erstreckt.

11. Mehrgängiges, unter Last schaltbares Wechselgetriebe nach einem oder mehreren der obigen Ansprüche, gekennzeichnet durch zwei oder drei Aufspaltungsgetriebesätze (20), welche dem Hauptgetriebe- und den Bereichsgetriebesätzen vorangehen, sowie durch einen Zapfwellenantrieb (C3, 17, 16), der von der Ausgangs-seite des Aufspaltungsgetriebesatzes aus angetrieben wird.

12. Mehrgängiges, unter Last schaltbares Getriebe mit einem Hauptgetriebesatz in Kaskade mit einem Bereichsgetriebesatz und zwei Kupplungen (C1, C2), um jeweils mit den ungerade und den gerade bezifferten Getrieberädern in Eingriff zu treten, bei dem eine der Kupplungen so angepaßt ist, daß sie mit dem Bereichsgetriebesatz so verbunden werden kann, daß die Getrieberäder des Hauptgetriebesatzes umgangen werden.

## Revendications

1. Boîte de vitesse à rapports multiples à passage de vitesses en charge, comprenant un premier et un deuxième embrayages à friction (C1, C2) qui comportent des parties d'entraînement et des parties entraînées;
un arbre d'entrée (10) auquel sont fixées les parties d'entraînement des embrayages à friction (C1, C2);
un premier et un deuxième sélecteurs (A, B) reliés de façon non tournante respectivement aux parties entraînées des embrayages à friction (C1, C2), pouvant tourner librement par rapport à l'arbre d'entrée (10) et prévus pour être accouplés à un premier et deuxième pignons (G1T et G2T) respectivement;
un arbre intermédiaire (arbre inférieur 13) auquel sont fixés un troisième et un quatrième pignons (G1B, G2B) en prise avec lesdits premier et deuxième pignons (G1T et G2T) respectivement;
un cinquième pignon (G8B) pouvant tourner librement sur l'arbre intermédiaire (arbre inférieur 13) et prévu pour être accouplé par un troisième sélecteur (D) à l'arbre intermédiaire;
un train d'engrenages de gamme comportant un premier et un deuxième arbres (14, 29) dont l'un est l'arbre de sortie (14) prévu pour être accouplé à l'arbre intermédiaire (arbre inférieur 13) par le troisième sélecteur (D); et
un septième et un huitième pignons (G8T et G4T) sur le deuxième arbre (29) et en prise avec le cinquième et un sixième pignons (G8B et G4B).

2. Boîte de vitesse à rapports multiples à passage en charge suivant la revendication 1, caractérisée par un quatrième sélecteur (E) fixé au premier arbre (14) et prévue pour être accouplé au sixième pignon (G4B) monté en rotation libre sur le premier arbre (14).

3. Boîte de vitesse à rapports multiples à passage en charge suivant la revendication 1, caractérisée par un neuvième pignon (G3T) prévu pour être accouplé au premier sélecteur (A) et en prise avec un dixième pignon (G3B) fixé à l'arbre intermédiaire (arbre inférieur 13).

4. Boîte de vitesse à rapport multiples à passage en charge suivant la revendication 1, caractérisée en ce que le deuxième sélecteur (B) est prévu pour être accouplé au deuxième arbre (29).

5. Boîte de vitesse à rapports multiples à passage en charge suivant la revendication 4, caractérisée en ce que le troisième sélecteur (D) est prévu pour être simultanément accouplé au cinquième pignon (G8B) et au premier arbre (14).

6. Boîte de vitesse à rapports multiples à passage en charge suivant une ou plusieurs des revendications précédentes, caractérisée en ce que le quatrième sélecteur (E) est prévu pour être accouplé à un pignon de marche arrière (GRB) monté en rotation libre sur le premier arbre (14).

7. Boîte de vitesse à rapports multiples à passage en charge suivant une ou plusieurs des revendications précédentes, caractérisée en ce que les premier et deuxième sélecteurs (A, B) sont reliés aux parties entraînées des embrayages à friction (C1, C2) par un premier et un deuxième arbres supérieurs creux (11, 12) pouvant tourner librement sur l'arbre d'entrée, de sorte que les premier et neuvième pignons (G1T, G3T) peuvent tourner librement sur le premier arbre supérieur (11) de part et d'autre du premier sélecteur (A) et de sorte que le deuxième pignon (G2T) peut tourner librement sur le deuxième arbre supérieur (12) entre le deuxième sélecteur (B) et le deuxième embrayage à friction (C2).

8. Boîte de vitesse à rapports multiples à passage en charge suivant une ou plusieurs des revendications ci-dessus, caractérisée en ce que le quatrième sélecteur (E) est fixé à l'arbre de sortie (14).

9. Boîte de vitesse à rapports multiples à passage en charge suivant une ou plusieurs des revendications précédentes, caractérisée en ce que l'arbre d'entrée (10), les premier et deuxième arbres supérieur (11, 12) et le deuxième arbre (29) constiuent une première ligne d'arbre (I), et l'arbre intermédiaire (arbre inférieur 13) et le premier arbre ou arbre de sortie (14) constituent une deuxième ligne d'arbre (II).

10. Boîte de vitesse à rapports variables à passage en charge suivant une ou plusieurs des revendications précédentes, caractérisée par un différential longitudinal (21) placé vers l'avant des trains et entraîné par le premier arbre de sortie (14), et un arbre entraîné (22) s'étendant dans le premier arbre ou arbre de sortie (14) et dans l'arbre intermédiaire (arbre inférieur 13) jusqu'à un différentiel transversal (24).

11. Boîte de vitesse à rapports multiples à passage en charge suivant une ou plusieurs des revendications précédentes, caractérisée par un train diviseur (20) à deux ou trois vitesses, qui précède le train principal et le train de gamme, et par un entraînement de prise de force (C3, 17, 16) entraîné à partir du côté de sortie du train diviseur.

12. Boîte de vitesse à rapports multiples à passage en charge comprenant un train principal en cascade avec un train de gamme et un embrayage double (C1, C2) pour enclencher les pignons de rang impair et de rang pair respectivement, dans laquelle l'un des embrayages est prévu pour être accouplé au train de gamme de manière à court-circuiter les pignons du train principal.

FIG.1

FIG.2